# EUROPEAN PATENT APPLICATION

(11) **EP 1 536 625 A1**
(43) Date of publication of application: **01.06.2005**
(21) Application number: 04027930.9
(22) Date of filing: 24.11.2004
(51) Int. Cl.: H04N 1/04

(54) **Document handler with improved sheet transport at scanning position**

(30) Priority: 25.11.2003 US 721850
(71) Applicant: Xerox Corporation, Rochester, New York 14644 (US)
(72) Inventor: Dekoning, Petrus, T., Toronto Ontario Canada M4V 1B9 (CA)
(74) Representative: Grünecker, Kinkeldey, Stockmair & Schwanhäusser Anwaltssozietät

(57) **Abstract**

In an office apparatus such as a scanner or copier, a document handler successively moves image-bearing sheets past an image receptor (32). Near the image receptor, the sheets pass between a backing member (52) and a solid pane (50). The pane is fixedly attached to the document handler, and travels with the document handler when the document handler is lifted away from the main body of the apparatus. The backing member within the document handler is urged against the pane, to maintain close contact of the pane to a sheet being scanned.

## Description

### TECHNICAL FIELD

The present disclosure relates to a document handler for use in a digital copier or scanner.

### BACKGROUND

Document handlers are devices which draw individual sheets from a stack of sheets, and sequentially allow the image on each sheet to be recorded, typically by a photoreceptor (in a "light-lens" or analog copier) or by a photosensitive device (in a digital copier, scanner, or facsimile). In a common arrangement, a copier has a conventional main platen, on which single sheets can be manually placed, as well as a smaller platen, typically adjacent the main platen, which is used by the document handler when sheets are being passed therethrough. In a typical design, when a single sheet is being recorded through the main platen, the photosensitive device is moved relative to the platen to record the entire image; when the document handler is being used to expose images through the smaller platen, a photosensitive device is typically left stationary under the smaller platen, and the motion of the sheet caused by the hardware within the document handler provides the necessary relative motion of each sheet past the photosensitive device.

In a practical application, the use of the smaller platen presents difficulties, particularly when the sheet-handling hardware in the document handler is used at high speeds. The vibrations within a document handler at high speeds may cause a sheet moving over the smaller platen to be momentarily out of contact with the smaller platen at a moment of exposure by the photosensitive device. In other words, at high speeds a portion of the moving sheet "bounces" against the smaller platen. This bouncing is particularly common in designs where the document handler is pivotably mounted on the main body of the machine. As photosensitive devices often have poor depth-of-field characteristics, the bouncing away from the smaller platen results in the image on the sheet being momentarily out of focus, leading to unsatisfactory image quality in the recorded image data.

### SUMMARY

There is provided an apparatus for recording images on sheets, comprising an image receptor, disposed in a main body of the apparatus, and a document handler, for conveying each of a set of sheets past the image receptor. The document handler is movably mounted relative to the main body of the apparatus. A light-transmissive pane is fixedly mounted relative to the document handler, and is operatively disposed between a sheet and the image receptor when the document handler is moving sheets past the image receptor.
In a further embodiment the apparatus of claim 1 further comprises
a second pane operatively disposed in front of the image receptor, the second pane being mounted within the main body of the apparatus.
In a further embodiment the second pane is disposed a predetermined distance from the pane when the document handler is positioned against the main body of the apparatus.
In a further embodiment the second pane contacts the pane when the document handler is positioned against the main body of the apparatus.
In a further embodiment the image receptor including a photosensitive chip.
In a further embodiment the main body of the apparatus includes a main platen, and wherein the main platen is optically equivalent to the pane, relative to the image receptor when the document handler is positioned against the main body of the apparatus.
In a further embodiment the main body of the apparatus includes a main platen, and wherein the main platen and the pane are substantially co-planar when the document handler is positioned against the main body of the apparatus.
In a further embodiment the apparatus further comprises a main platen in the main body of the apparatus, a lower pane adjacent the pane, and wherein the main platen is optically equivalent to the pane in combination with the lower pane, relative to the image receptor when the document handler is positioned against the main body of the apparatus.
In a further embodiment the apparatus further comprises a main platen in the main body of the apparatus, a lower pane adjacent the pane, and wherein the main platen and the pane in combination with the lower pane are substantially co-planar when the document handler is positioned against the main body of the apparatus.

There is further provided an apparatus for recording images on sheets comprising an image receptor, disposed in a main body of the apparatus, and a document handler, for conveying each of a set of sheets past the image receptor. The document handler is movably mounted relative to the main body of the apparatus. Means are provided for covering the image receptor in response to the document handler being positioned away from the main body of the apparatus.

In a further embodiment the main body of the apparatus includes a main platen, and the covering means including means for moving the image receptor under the main platen in response to the document handler being positioned away from the main body of the apparatus.
In a further embodiment the apparatus further comprises
a light-transmissive pane fixedly mounted relative to the document handler, and operatively disposed between a sheet and the image receptor when the document handler is moving the sheet past the image receptor. In a further embodiment the apparatus further comprises
means for urging the backing member against the pane.
In a further embodiment the backing member is a backing roll.
In a further embodiment the backing member includes resilient properties.
In a further embodiment the image receptor including a photosensitive chip.

### BRIEF DESCRIPTION OF THE DRAWINGS

Figure 1 is an sectional elevational view of a document handler in combination with a scanner or copier.
Figure 2 is a detailed sectional elevational view showing a portion of a document handler in combination with a scanner or copier.

### DETAILED DESCRIPTION

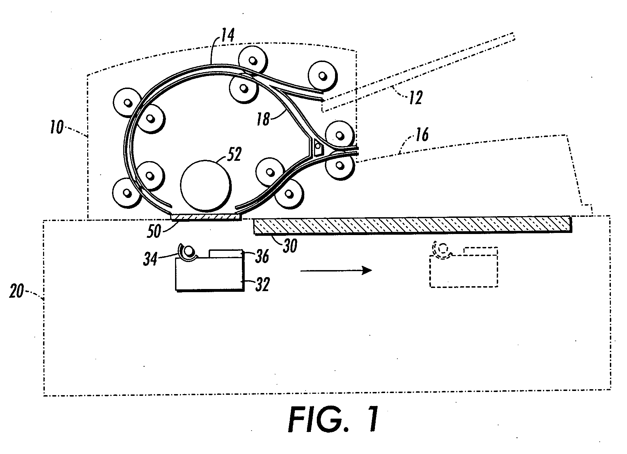

Figure 1 is an elevational view of a document handler in combination with a scanner or copier. The document handler, generally indicated as 10, sits atop a main body 20 of the scanner or copier. As is common in office equipment, the document handler 10 is positionable or movable relative to the main body 20, typically by a pivot or hinge-like mechanism (not shown) at the back of the scanner. Further as is common, when the document handler 10 is moved away form the main body 20, a main platen 30 is in effect exposed to the user, so that the user can place a single sheet to have an image thereon recorded.

Underneath main platen 30, in this embodiment, is what is here called a scanner bar 32. Mounted on scanner bar 32 is a light source 34 and a photosensor array 36, which are arranged so that light emitted by light source 34 is reflected by an image disposed over main platen 30, and the reflected light is recorded by an image receptor, which can be a portion of a xerographic photoreceptor, but in this embodiment is a photosensor array 36. Photosensor array 36 typically includes a set of abutted photosensitive chips, and is connected to image processing circuitry downstream (not shown), to record image data in a manner familiar in the art. When a single sheet or other item is desired to be recorded, the scanner bar 32 is caused to move, as shown, relative to the main platen 30 to record an entire image on main platen 30.

When the document handler 10 is used to record images on one or more sheets, the sheets are placed in input tray 12, and are drawn one at a time through path 14 (by one or more motors, not shown, driving the rollers along path 14) past scanner bar 32 and ultimately to an output tray 16. If a document handler 10 is capable of "duplexing," that is, sequentially scanning first one side and then the other side of a sheet, the sheet is effectively inverted and passed through duplexing path 18 for scanning of the second side, in a manner generally familiar in the art. When the document handler 10 is used, scanner bar 32 remains stationary relative to the main body 20, and successive sheets are moved therepast through path 14.

In the illustrated embodiment, there is associated with document handler 10 what is here called a "pane" 50. Pane 50 is light-transmissive solid member through which light from light source 34 and reflected from a portion of a sheet passing through path 14 of document handler 10. Pane 50 is rigidly attached to document handler 10, and when the document handler 10 is moved away from the main body 20 (such as to expose main platen 30), the pane 50 travels with document handler 10. This arrangement is in contrast with an arrangement such as in the '995 patent described above, in which sheets in the document handler slide against a small platen which is mounted on the main body of the scanner.

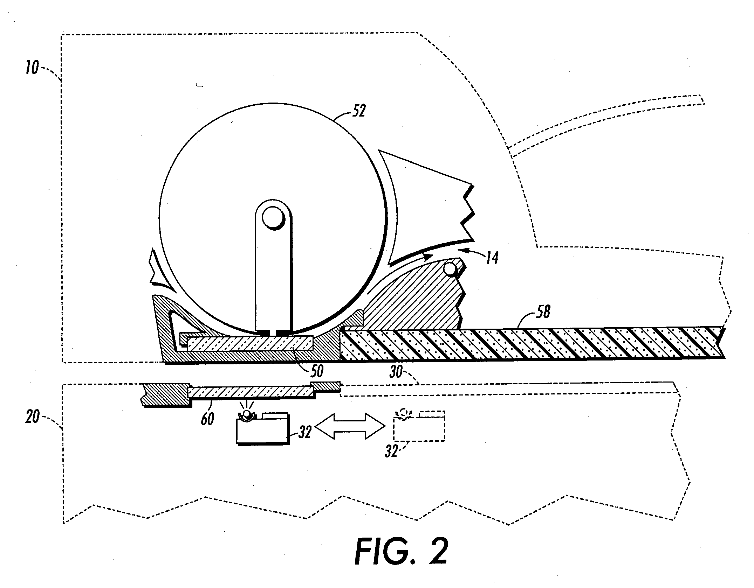

Figure 2 is a detailed sectional elevational view showing a portion of document handler 10 and main body 20; in this Figure, document handler 10 is shown slightly spaced from the main body 10, as would occur when the document handler 10 is raised slightly. A backing roll 52 within document handler 10 is disposed adjacent the pane 50, so that a sheet passing through path 14 is passable between pane 50 and backing roll 52. In one embodiment, a backing member such as backing roll 52 is urged against pane 50 by suitable means, such as including one or more springs or other resilient members (not shown). The urging means can also include a resilient property of the backing member itself. The urging means or other resilient properties of members within document hander 10 also contribute to the lessening of vibration around the pane 50, which will have a positive effect on scanning quality.

An effect of the close contact or urging of a sheet being scanned between pane 50 and backing roll 52 is that the backing roll 52 causes the sheet to retain continuous contact against the pane 50, generally regardless of vibrations within the apparatus. By retaining continuous contact against pane 50, the surface of the sheet 50 will remain a fixed distance from the photosensor array 36, ensuring that the sheet will remain precisely focused relative to the photosensor array 36 throughout the duration of the recording by photosensor array 36.

Also shown in Figure 2, associated with main body 20, is a lower pane 60, which is disposed adjacent pane 50 when the document handler 10 is lowered to a closed position against main body 20. In one possible embodiment, the pane 50 can be in contact with lower pane 60, which is disposed adjacent pane 50 when the document handler 10 is lowered to a closed position against main body 20. Lower pane 60 acts as a dust cover for the scanner bar 32, and can also act as a positioning surface for establishing a fixed, predetermined distance between pane 50 and lower pane 60, once again ensuring a known and unchanging distance between scanner bar 32 and a sheet in path 14 sliding over the top surface of pane 50. When the document handler 10 is lowered against main body 20, foam backing 58 is in contact with main platen 30.

Since scanner bar 32 is used to record hard-copy images on either main platen 30 or through pane 50 (and possibly through lower pane 60 as well), the optical layout and positioning of main platen 30 and pane 50 and lower pane 60 may, in some embodiments, be made consistent, especially if the scanner bar 32 is effectively movable only in a direction parallel to main platen 30. For example, when the document handler 10 is lowered against body 20, main platen 30 and pane 50 can be substantially co-planar; if lower pane 60 is used as well, main platen 30 can be effectively co-planar with the combination of pane 50 and lower pane 60. Such an arrangement is helpful in a design in which main platen 30 is, from the perspective of scanner bar 32, optically equivalent to pane 50 (or pane 50 in combination with lower pane 60).

In a practical implementation, scanner bar 32, with its lamp 34 and photosensor array 36, must be physically protected from dirt, especially when the document handler is raised away from the main body 20. If lower pane 60 is not used, it is desirable to protect the scanner bar 32 in some other way. One way is to cause the scanner bar to move to a covered parking position, such as to a location somewhere underneath main platen 30, in response to the document handler 10 being lifted up. Another strategy would be to provide a small retractable door (not shown) over scanner bar 32, the door being operated by a spring mechanism or an electromechanical device. The door would extend over scanner bar 32 in response to the document handler 10 being lifted up, through means such as including a switch for sensing the position or latching of document handler 10, as in generally known in the art.

Although the illustrated embodiment includes a photosensor array 36, which is mounted on a scanner bar 32, an implementation could be provided with a single-chip photosensor in combination with reductive optics.

## Claims

1. An apparatus for recording images on sheets, comprising:
an image receptor, disposed in a main body of the apparatus;
a document handler, for conveying each of a set of sheets past the image receptor, the document handler being movably mounted relative to the main body of the apparatus; and
a light-transmissive pane fixedly mounted relative to the document handler, and operatively disposed between a sheet and the image receptor when the document handler is moving the sheet past the image receptor.

2. The apparatus of claim 1, further comprising
a backing member within the document handler, adjacent the pane.

3. The apparatus of claim 2, further comprising
means for urging the backing member against the pane.

4. The apparatus of claim 2, wherein the backing member is a backing roll.

5. The apparatus of claim 2, wherein the backing member includes resilient properties.

6. The apparatus of claim 1, further comprising
means for covering the image receptor when the document handler is positioned away from the main body of the apparatus.

7. The apparatus of claim 6, the covering means including means for moving the image receptor to an effectively covered position when the document handler is positioned away from the main body of the apparatus.

8. The apparatus of claim 1, wherein the main body of the apparatus includes a main platen, and further comprising means for moving the image receptor under the main platen in response to the document handler being positioned away from the main body of the apparatus.

9. An apparatus for recording images on sheets, comprising:
an image receptor, disposed in a main body of the apparatus;
a document handler, for conveying each of a set of sheets past the image receptor, the document handler being movably mounted relative to the main body of the apparatus; and
means for covering the image receptor in response to the document handler being positioned away from the main body of the apparatus.

10. The apparatus of claim 9, the covering means including means for moving the image receptor to an effectively covered position when the document handler is positioned away from the main body of the apparatus.
